# EUROPEAN PATENT APPLICATION

(11) **EP 1 362 886 A1**
(43) Date of publication of application: **19.11.2003**
(21) Application number: 02010953.4
(22) Date of filing: 16.05.2002
(51) Int. Cl.: C08K 7/02, C08L 25/06, C08J 7/04, C25D 13/12

(54) **A resin composition for producing a bodywork component**

(71) Applicant: BMW AG, 80788 München (DE); IDEMITSU PETROCHEMICAL COMPANY LIMITED, Ichihara-shi, Chiba (JP)
(72) Inventor: Wehner, Joachim, 83098 Brannenburg (DE); Otsuki, Yusuke, 1-1 Anesaki kaigan Ichihara-chi, Chiba (JP)
(74) Representative: Haft, von Puttkamer, Berngruber, Czybulka

(57) **Abstract**

A bodywork component consists of a polymer mixture consisting of a polystyrene and a rubber-like elastomer, with the syndiotactic polystyrene forming one continuous phase in the polymer mixture. Online enameling can be carried out with the bodywork component.

## Description

The invention refers to a resin composition for producing a bodywork component, particularly an automobile outer panel. It also refers to an automobile painting process, in which the automobile with at least one such outer panel goes through the electrophoretic enameling unit.

In recent years, control of the level and quality of automobile exhaust gas has been proposed and effected in every nation and city. In California, U.S., strict restrictions are imposed on the level of exhaust gas. Meeting such severe restrictions is difficult by the employment of existing techniques and concepts.

In efforts to overcome the aforementioned difficulties, automobile makers provide countermeasures such as ultralow-fuel consumption vehicles, hybrid vehicles, and electric vehicles; electronic control for highly efficient combustion of fuel; and removal of toxicity from toxic exhaust gas by means of a muffler.

Whichever method is employed, the fuel consumption rate must be improved. Thus, reduction of the weight of an automobile main body is an essential issue, and replacement of metallic automobile parts with those made of plastic is under investigation.

More and more bodywork panels are being replaced by plastic components, but not only because of their low weight, also because they do not corrode, are insensitive to minor damage and allow great freedom of design.

Conventionally, employment of plastic materials has been proposed for producing bumpers and outer panels of a certain type, and these parts have actually been produced from plastic materials. Examples of the plastic materials used include polypropylene (PP), polycarbonate (PC), and polyamide (PA). However, these materials exhibit insufficient heat resistance during coating (usually a baking step).

The painting of plastic components such as bumpers is generally effected by the supplier. However, producers endeavor to paint the entire bodywork as far as possible in the paint shop of the automobile manufacturer. For logistical reasons, but also because suitably trained and qualified assembly personnel is available, the bodywork should first be assembled as fully as possible in the automobile plant before it is sent to the paint shop.

Currently, a polymer mixture of polyphenylene oxide (PPO) and polyamide (PA), which is marketed under the designation "Noryl GTX", is preferably used as a plastic for bodywork components.

Besides its low form stability at the temperature of the paint drier and a high thermal coefficient of expansion, the high absorption of humidity of approx. 1.2% of these plastics is a disadvantage. This means that when the paint dries, contraction takes place due to the loss of humidity, which can lead, for example, to the tips of the wings contracting several millimeters behind the front edge of the front hood after painting if these wings are made of this plastic. Through additional working operations, the material can be "overconditioned", that is, it can be set to a humidity content of 2 % and more in order to compensate for the loss of humidity resulting from the paint drier. However, this means that in the event of subsequent vehicle painting in the automobile plant additional loss of humidity occurs, which in turn has an adverse effect on dimensional accuracy.

The automobile painting process generally comprises a three to four-layer paint application consisting of one electro dipcoat, a filler and a one or two-layer covering layer.

Particularly high temperatures of 180°C and more occur during drying after the electrophoretic enameling. On the one hand, this is supposed to result in short drying times. At the same time, the high temperature of the electrophoretic enameling drier also serves to carry out other processes, for example hardening of bodywork bonding agents or aftercuring when so-called "bake-hardening" panels are used.

Unlike online painting, in which a plastic bodywork component runs through the entire sequence of the painting process together with the body shell in a finally assembled state, with inline painting, the plastic component, which may have been primed by the supplier, is transported to the painting process in the automobile plant after the electrophoretic enameling unit and before the application of the filler to ensure that it is not exposed to the high temperatures of the electrophoretic enameling unit. Inline painting, however, leads to significant logistical problems due to the subsequent assembly of the plastic parts, which must then be effected in the paint shop. Another factor is that there is normally no assembly personnel available in the paint shop. In addition the paint coat may be damaged during the assembly.

Attempts are also made to paint plastic wings which are provisionally attached to the vehicle with fastening elements online. The fastening elements are removed or tightened after the bodywork has been painted. The wings must then also be adjusted within the framework of final assembly.

The purpose of the invention is therefore to provide a plastic bodywork component for a painted vehicle body which meets the highest standards and which runs through the entire sequence of the painting process on the body shell in a finally assembled state.

According to the invention, this is attained with a resin composition according to claim 1.

The present inventors have found that the aforementioned object can be attained by a resin composition predominantly comprising a syndiotactic styrene polymer (SPS), wherein the composition contains a fibrous filler material in an amount of 3 to 50 parts by weight based on 100 parts by weight of SPS; exhibits an MI of 4 to 40 at 300°C under a load of 2.16 kg; and has a heat distortion temperature of 200°C or higher at 0.46 MPa.
Conventionally, SPS has been used for producing, for example, electric-electronic parts such as connectors, and automobile electronic equipment such as control units. However, automobile outer panels must have considerably excellent appearance after coating, and are formed into a variety of shapes and often into large-scale parts.

Conventional SPS compositions cannot provide satisfactory appearance.
According to the present invention, resin products having excellent appearance and heat resistance can be produced by employing an SPS having excellent flowability and limiting the amount of the filler material to be added.
In addition, a polymer having compatibility or affinity with SPS and containing a polar group is added in a predetermined amount, thereby successfully yielding products of excellent appearance while maintaining heat resistance without decreasing flowability.

### [Modes for Carrying Out the Invention]

### Materials

### (1) Styrene polymer having syndiotactic configuration (SPS)

(a) Syndiotactic configuration: This term refers to the stereochemical structure having a syndiotactic configuration; i.e., a steric structure in which side-chain phenyl groups and substituted phenyl groups are located alternately in opposite directions on a main chain comprising carbon-carbon bonds. The tacticity thereof is determined through the nuclear magnetic resonance method making use of an isotopic carbon (¹³C-NMR method). The tacticity determined through the ¹³C-NMR method can be represented by the number of existing plural continuous constitutional units. For example, in the case in which two continuous units exist, the tacticity is called a diad; in the case in which three continuous units exist, it is called a triad; and in the case in which five continuous units exist, it is called a pentad. The styrenic polymer having a syndiotactic configuration according to the present invention has a syndiotacticity generally 75% or more, preferably 85% or more in terms of a racemic diad, or typically 30% or more, preferably 50% or more, in terms of a racemic pentad.
(b) Specific examples: The styrenic polymer refers to polystyrene, poly(alkylstyrene), poly(halogenated styrene), poly(halogenated alkylstyrene), poly(alkoxystyrene), poly(vinyl benzoate), a hydrogenated polymer thereof, a mixture thereof, or a copolymer predominantly containing any of the above polymers.
(b-1) Examples of the poly(alkylstyrene) include poly(methylstyrene), poly(ethylstyrene), poly(isoproylstyrene), poly(tert-butylstyrene), poly(phenylstyrene), poly(vinylnaphthalene), and poly(vinylstyrene).
(b-2) Examples of the poly(halogenated styrene) include poly(chlorostyrene), poly(bromostyrene), and poly (fluorostyrene).
(b-3) Examples of the poly(halogenated alkylstyrene) include poly(chloromethylstyrene).
(b-4) Examples of the poly(alkoxystyrene) include poly(methoxystyrene) and poly(ethoxystyrene).
(C) Examples of particularly preferred styrenic polymers include polystyrene, poly(p-methylstyrene), poly(m-methylstyrene), poly(p-tert-butylstyrene), poly(p-chlorostyrene), poly(m-chlorostyrene), poly(p-fluorostyrene), hydrogenated polystyrene, and a copolymer containing a moiety of any of these polymers as a structural unit.
(D) Production method: For example, SPS can be produced by polymerizing styrenic monomers (monomers corresponding to the aforementioned styrenic polymers), in inert hydrocarbon solvent or in the absence of solvent, and in the presence of a catalyst comprising a titanium compound and a condensation product of water and a trialkylaluminum (Japanese Patent Application Laid-Open (*kokai*) No. 187708/1987). Poly(halogenated alkylstyrene) can be produced through the method disclosed in Japanese Patent Application Laid-Open (*kokai*) No. 46912/1989, and the aforementioned hydrogenated polymer can be produced through a known method; e.g., the method disclosed in Japanese Patent Application Laid-Open (*kokai*) No. 178505/1989.
(E) Physical properties: SPS preferably has an MI of 10-60 at 300°C under a load of 1.2 kg. When the MI is less than 10, the flowability of the resin composition may decrease, causing deterioration in moldability and appearance of molded products, whereas when the MI is in excess of 60, the strength of the products and mold-releasability may decrease.
(F) These SPSs may be used singly or in combination of two or more species.

### (2) Fibrous filler materials

(a) Specific examples: Specific examples include glass fiber; milled glass prepared by pulverizing glass fiber; carbon fibers; and whiskers. Of these, carbon fiber and glass fiber are preferred, with glass fiber being particularly preferred.
(b) Forms: cloth, mat, cut bundles, chopped strands, filaments, and whiskers.
(c) Dimensions: The filler material of cut bundle form preferably has a length of 0.05 mm to 50 mm and a fiber radius of 5-20 µm, with a length of 0.5 mm to 40 mm and a fiber radius of 7-15 µm being particularly preferred.
(d) The fibrous filler material is preferably surface-treated. The surface-treatment is performed by use of a coupling agent for enhancing bonding between filler material and resin. The coupling agent is selected from any known coupling agents such as silane coupling agents and titanium coupling agents. Examples of preferred coupling agents include aminosilanes such as γ-aminopropyltrimethoxysilane, N-β-(aminoethyl)-γ-aminopropyltrimethoxysilane, γ-glycidoxypropyltrimethoxysilane, and β-(3,4-epoxycyclohexyl)ethyltrimethoxysilane; epoxysilanes; isopropyltri(N-amidoethyl, aminoethyl)titanate; and urethanes.
(e) A film-forming substance for glass can be used in combination with the aforementioned coupling agent. No particular limitation is imposed on the film-forming substance, and examples include polymers such as polyesters, polyethers, urethane polymers, epoxy polymers, acrylic polymers, and vinyl acetate polymers.
(f) Amount of filler material: The filler material is required to be added in an amount of 3-50 parts by weight based on 100 parts by weight of SPS. When the amount is less than 3 parts by weight, heat resistance decreases considerably, causing deformation during a coating step, whereas when the amount is in excess of 50 parts by weight, appearance of the products is deteriorated.
(g) These fibrous filler materials may be used singly or in combination of two or more species.

### (3) Polymer having compatibility and affinity with SPS and containing a polar group

(a) Polymer having compatibility and affinity with SPS: The polymer refers to a polymer which contains in a polymer chain a chain fragment having compatibility and affinity with SPS. Examples of the polymer include polymers having, as a main chain, a block chain, or a graft chain, syndiotactic polystyrene, atactic polystyrene, isotactic polystyrene, styrene copolymers, poly(phenylene ether), and poly(vinyl methyl ether).
(b) Polar group: No particular limitation is imposed on the polar group, and any polar group can be employed so long as the group enhanced bonding with fibrous filler material. Examples include an acid anhydride group, a carboxylic acid group, a carboxylic acid ester group, a carboxylic acid chloride group, a carboxamide group, a carboxylic acid salt group, a sulfonic acid group, a sulfonic acid ester group, a sulfonic acid chloride group, a sulfonamido group, a sulfonic acid salt group, an epoxy group, an amino group, an imido group, and an oxazoline group.
(c) Examples of the polymer: Examples of preferred polymers include modified styrene polymers such as styrenemaleic anhydride copolymers (SMA), styrene-glycidyl methacrylate copolymers, carboxylic acid-terminal-modified polystyrene, epoxy-terminal-modified polystyrene, amine-terminal-modified polystyrene, sulfonated polystyrene, styrene ionomers, styrene-methyl methacrylate graft polymers, (styrene-glycidyl methacrylate)-methyl methacrylate graft polymers, acid-modified acrylic-styrene graft polymers, (styrene-glycidyl methacrylate)-styrene graft polymers, polybutylene terephthalate-polystyrene graft polymers, maleic anhydride-modified syndiotactic polystyrene, fumaric acid-modified syndiotactic polystyrene, glycidyl methacrylate-modified syndiotactic polystyrene, and amine-modified syndiotactic polystyrene; and modified polyphenylene ether polymers such as (styrenemaleic anhydride)-poly(phenylene ether) graft polymers, maleic anhydride-modified poly(phenylene ether), fumaric acid-modified poly(phenylene ether), glycidyl methacrylate-modified poly(phenylene ether), and amine-modified poly(phenylene ether). Of these, modified syndiotactic polystyrene and modified poly(phenylene ether) are particularly preferred. These polymers may be used singly or in combination of two or more species.
(D) Use purposes: These polymers are used in order to enhance bonding between SPS and fibrous filler material.
   Through enhancement of bonding, appearance of products can be enhanced, along with heat resistance and dynamic physical properties.
   When the bonding is poor, a coarse surface (roughened surface) attributed to fibrous filer material may be observed on a surface of the products. Such a course surface is conceived to be improved by the aforementioned polymers.
(E) Amount of polar groups in the polymer: The amount is preferably 0.01-20 wt.%, more preferably 0.05-10 wt.%. When the amount is less than 0.01 wt.%, the corresponding polymer must be added in a large amount so as to fully exert the effect of bonding with fibrous filler material. As a result, dynamic physical properties, heat resistance, and moldability may be deteriorated, which is disadvantageous. An amount in excess of 20 wt.% is also disadvantageous, because compatibility with SPS may be deteriorated.

### (4) Other additive components

The resin composition of the present invention may contain additives in accordance with purposes, without deviating from the scope of the present invention. Specifically, thermoplastic resin, rubber-like elastomers other than the aforementioned species, antioxidants, nucleating agents, plasticizers other than aforementioned species, mold-releasing agents, flame retardants, flame retardant aids, pigments, and anti-static agents may be incorporated.

### (4-a) Thermoplastic resin other than SPS

(i) Polyolefin resins: Examples include linear high density polyethylene, linear low density polyethylene, high-pressure low density polyethylene, isotactic polypropylene, syndiotactic polypropylene, block polypropylene, random polypropylene, polybutene, 1,2-polybutadiene, 4-methylpentene, and cyclic polyolefin.
(ii) Polystyrene resins: Examples include atactic polystyrene, isotactic polystyrene, HIPS (high impact polystyrene), ABS (acrylonitrile butadiene styrene copolymer), and AS (acrylonitrile styrene copolymer).
(iii) Polyester resins: Examples include polycarbonate, polyethylene terephthalate, and polybutylene terephthalate. (iV) Polyamide resins: Examples include polyamide 6, and polyamide 6,6.
(v) Examples of other polymers include poly(phenylene sulfide), poly(phenylene ether), and modified products thereof. Specific examples include fumaric acid-modified poly(phenylene ether) and maleic acid-modified poly(phenylene ether).
(vi) Examples of particularly preferred polymers include polyamide 6, and polyamide 6,6; polyethylene; polypropylene; polystyrene resins such as atactic polystyrene, isotactic polystyrene, HIPS, ABS, and AS; poly(phenylene ether); fumaric acid-modified poly(phenylene ether); maleic acid-modified poly(phenylene ether); and poly(phenylene sulfide). These thermoplastic resins may be used singly or in combination of two or more species.

### (4-b) Rubber-like elastomers

Examples include natural rubber; polybutadiene; polyisoprene; polyisobutylene; neoprene; polysulfide rubber; Thiokol rubber; acrylic rubber; urethane rubber; silicone rubber; epichlorohydrin rubber; styrene-butadiene block copolymer (SBR); hydrogenated styrene-butadiene block copolymer (SEB); styrene-butadiene-styrene block copolymer (SBS); hydrogenated styrene-butadiene-styrene block copolymer (SEBS); styrene-isoprene block copolymer (SIR); hydrogenated styrene-isoprene block copolymer (SEP); styrene-isoprene-styrene block copolymer (SIS); hydrogenated styrene-isoprene-styrene block copolymer (SEPS); olefin rubber elastomers such as ethylene-propylene rubber (EPM), ethylene-propylene-diene rubber (EPDM), and ethylene-octene copolymer elastomer; core-shell type granular elastomers of siloxane-containing core-shell rubber elastomers such as butadiene-acrylonitrile-styrene core-shell rubber (ABS), methyl methacrylate-butadiene-styrene core-shell rubber (MBS), methyl methacrylate-butyl acrylate-styrene core-shell rubber (MAS), octyl acrylate-butadiene-styrene core-shell rubber (MABS), alkyl acrylate-butadiene-acrylonitrile-styrene core-shell rubber (AABS), butadiene-styrene core-shell rubber (SBR), methyl methacrylate-butyl acrylate-siloxane; and modified rubber elastomers thereof. Of these, SBR, SEB, SBS, SEBS, SIR, SEP, SIS, SEPS, and modified rubber elastomers thereof are preferably used. These rubber-like elastomers may be used singly or in combination of two or more species.

### (4-c) Antioxidants

Any known antioxidants such as those of phosphorus-containing, phenolic, and sulfur-containing can be used. These antioxidants may be used singly or in combination of two or more species.

### (4-d) Nucleating agents

Any known nucleating agents including carboxylic acid metal salts such as aluminum di(p-t-butyl benzoate); metal phosphates such as sodium methylenebis(2,4-di-t-butylphenol) acid phosphate; talc; and phthalocyanine derivatives can be used.

Specific examples include NA11, NA21, and NA35 (products of Asahi Denka) and PTBBA-AL (product of Dainippon Ink and Chemicals, Inc.). These nucleating agents may be used singly or in combination of two or more species.

### (4-e) Plasticizers

Any known plasticizers including paraffin oil, naphthene oil, aromatic oil, polyethylene glycol, polyamide oligomers, ethylene bisstearamide, phthalic acid esters, polystyrene oligomers, polyethylene wax, and silicone oil can be used. These plasticizers may be used singly or in combination of two or more species.

### (4-f) Mold-releasing agents

Any known mold-releasing agents including polyethylene wax, silicone oil, long-chain carboxylic acids, and long-chain carboxylic acid metal salts can be used. Of these, dimethylsilicone oil and methylphenylsilicone oil are particularly preferred. These mold-releasing agents may be used singly or in combination of two or more species.

### (4-g) Flame retardants and flame retardant aids

Any known flame retardants including brominated polymers such as brominated polystyrene, brominated syndiotactic polystyrene, and brominated poly(phenylene ether); and brominated aromatic compounds such as bromine-containing diphenylalkanes and bromine-containing diphenyl ether can be used.

Any known flame retardant aids including antimony compounds such as antimony trioxide can be used.

These flame retardants and flame retardant aids may be used singly or in combination of two or more species.

The bodywork component in accordance with the invention preferably consists of a thermoplastic polymer mixture consisting of at least 2 polymers, namely a syndiotactic polystyrene and a rubber-like elastomer, with the syndiotactic polystyrene forming one continuous phase in the polymer mixture.

The rubber-like elastomer particles form a dispersed phase in the SPS matrix. The rubber-like elastomer particles in the SPS matrix give the bodywork component the necessary strength properties, in particular high impact strength.

The component in accordance with the invention has a low density of between 1.0 and 1.3, in particular 1.04 to 1.15 g/cm³. It also has a low thermal coefficient of expansion α of about 10 x 10⁻⁶ - 80 x 10⁻⁶ 1/K. It has high rigidity, namely a modulus of elasticity of more than 3000, for example 4000 - 6000 MPa as well as good dimensional stability and dimensional accuracy, and a very good rupture image. The polymer mixture in accordance with the invention also has good processing properties, such as flowability, thermal stability, no runmarks or the like. The bodywork components in accordance with the invention are characterized by their high dimensional stability. Furthermore, the thermoplastic polymer mixture used in accordance with the invention leads to satisfactory dimensional stability in order to stand up to the high drying temperatures without permanent deformation.

In particular, however, the bodywork component in accordance with the invention has very low humidity absorption and thus very low contraction during and after the painting process of a total of less than 0.8 %, in particular less than 0.4 %, preferably less than 0.1 %. In its finally assembled state, therefore, the bodywork component in accordance with the invention can run through the entire painting process, including the electrophoretic enameling unit, with the body shell, that is, online.

In order to improve rigidity and other strength properties, the polymer mixture may also contain a polyamide, such as polyamide 6 or 66, as a blending partner. To ensure that a noticeable increase in rigidity and strength properties takes place, the proportion of polyamide must amount 5 to 100 parts by weight based on 100 parts by weight of the syndiotactic styrene polymer (SPS). Through the addition of polyamide, however, the humidity absorption of the bodywork component, and thus contraction, may also increase somewhat. For this reason, therefore, the proportion of polyamide is not more than 100 parts by weight of the syndiotactic styrene polymer. The polyamide also leads to an increase in strength and a surface improvement. The polyamide particles are dispersed in the SPS matrix.

In order to be able to electrostatically prime the bodywork component in accordance with the invention, the polymer mixture preferably contains an electrically conductive material, in particular electrically conductive carbon, for example in the form of carbon black or carbon fibers. The quantity of the electrically conductive material is 1 to 20 parts by weight based on 100 parts by weight of the syndiotactic styrene polymer (SPS), and can be, for example, between 2 and 15 % by weight.

The bodywork components in accordance with the invention may be produced by means of injection molding, deep drawing and similar plastic processing methods. The bodywork components are particularly an automobile outer panels. As well as the wings mentioned above, they may also form other outer skin and exterior bodywork components, for example module roofs, tailgates, doors, sills, spoilers or other vehicle trimming components, but also interior bodywork components, for example motor vehicle instrument panels.

Since they only have low humidity absorption and thus low contraction, the bodywork components in accordance with the invention can be subjected not only to electrophoretic enameling, that is, for example, cathodic electrophoretic enameling and thus a form of online painting, but this electrophoretic enameling can also be carried out at a high temperature of at least 175°C, in particular more than 180°C or even at more than 190°C.

Although the polymer mixture used in accordance with the invention has a low thermal coefficient of expansion, the high temperatures in the course of drying lead to lengthening of the component in accordance with the invention, and a contraction of the said component after the painting process.

This change in length can be compensated by a wing which is described in German patent application 102 13 168.6 , to the content of which full reference is made here. This wing has several longitudinal holes in a first marginal area on the hood side and in a second marginal area on the bearing pillar side, running at an angle to the first marginal area, said holes being positioned at a certain distance from each other and stretching in the direction of the thermal expansion of the wing; a retaining element, which in turn is fastened to the bodywork, is located in each of these holes, with the wing in its finally assembled state being immovably attached to the bodywork at the corner area located between the first and the second marginal areas and the attachment sections of a guide element which in turn is immovably attached to the bodywork reach into the longitudinal holes in such a way that in the event of thermal expansion, the wing can move longitudinally in relation to the guide elements which are fastened to the bodywork. In this case, the wing with the above-mentioned corner area may be attached to the bearing pillar with a screw, for example.

Other components in accordance with the invention, in particular longer components, can be finally assembled in the same way. This means that the component in question is immovably attached to the bodywork at only one place, for example with one or several screws positioned close to each other. Furthermore, the component shall have longitudinal holes that stretch in the main direction of elongation of the component. Guide elements which are attached to the bodywork reach into these longitudinal holes in such a way that in the event of thermal expansion, the component can move longitudinally in relation to the guide elements.

### Resin composition

### (1) Manufacturing method

No particular limitation is imposed on the method for producing the resin composition of the present invention, and the composition may be produced by blending; for example, mixing the aforementioned components at ambient temperature or melt-kneading the components. Among these mixing and kneading methods, melt-kneading by use of a double screw extruder is preferably employed. In melt-kneading by use of a double screw extruder, a kneading temperature falling within a range of 270 to 350°C is preferred. This is because when the kneading temperature is lower than 270°C, the resin viscosity is excessively high, causing deterioration of productivity, whereas when the temperature is in excess of 350°C, the resin is prone to undergoing undesirable thermal decomposition.

### (2) Physical properties

The resin composition must have an MI of 4 to 40 (g/10 min)at 300°C under a load of 2.16 kg. When the MI is less than 4, flowability is poor and products of excellent appearance are difficult to obtain, whereas when the MI is 40 or more, products having sufficient mechanical strength and heat resistance are difficult to obtain.

The heat distortion temperature, which is an index of heat resistance, must be 200°C or higher at 0.46 MPa. Unless the resin composition has a heat distortion temperature higher than 200°C (i.e., heat resistance), the composition tends to cause deformation during a coating step. Such a composition is not suitable for production of outer panels.

### Molding method

(1) The resin composition of the present invention provides molded products having excellent physical properties, regardless of the type of molding method. Examples of molding methods include injection molding, multi-color injection molding, injection-compression molding, injection-inflation molding, gas-blow injection molding, extrusion, vacuum or air pressure thermal forming, and blow molding.
(2) Molding conditions
   (a) For injection molding
      The molding temperature is preferably 270-350°C. A molding temperature lower than 270°C may lower flowability, and a molding temperature in excess of 350°C may cause thermal decomposition of the resin, making such temperatures undesirable. The temperature of a mold is preferably 20°C to 200°C, more preferably 30°C to 180°C. When the mold temperature is lower than 20°C, SPS is not crystallized sufficiently, and characteristics of SPS may fail to be fully attained, whereas when the mold temperature is in excess of 200°C, toughness upon mold release decreases, inviting the risk of cracks by an ejector and deformation.
   (b) For forming sheet through extrusion
      Preferably, the resin composition is kneaded at a cylinder temperature of 270-350°C. When the kneading temperature is lower than 270°C, the resin viscosity is excessively high, and productivity may be deteriorated. When the kneading temperature is higher than 350°C, the resin may undergo thermal decomposition. The roll temperature is preferably 20°C to 120°C. When the roll temperature is lower than 20° C, appearance of resin sheet products may be deteriorated, whereas when the roll temperature is higher than 120°C, the resin may be melted and cohere to the roll.

### Coating

(1) General features
   In general, coating of an automobile is performed on a whole body after attachment of outer panels to the body. The purposes of coating of an automobile are to prevent corrosion of steel sheets forming the body and to dress the appearance. The coating layer includes three layers; i.e., undercoating, intermediate coating, and top coating.
(2) Undercoating: An undercoating plays an important role in providing affinity between the body steel sheet and a coating material and serves as an anti-corrosive coating.
(3) Intermediate coating: An intermediate coating smoothens the surface of the undercoat layer and serves as a surfacer for providing good appearance of the finished surface of the top coating.
(4) Top coating: Types of top coating include solid coating and metallic coating. Metallic coating is provided from base coating and clear coating. The color of the base coating determines the color of an automobile. When only the base coating is provided, the resultant coating is called solid coating. The metallic coating is provided by applying a base coating material containing aluminum flakes to the body, and applying a transparent, clear coating material to the base coating layer for surface protection. When mica flakes instead of aluminum flakes are added to a base coating material, the resultant coating is called pearl coating or mica coating, and provides a slightly different glossy appearance as compared with metallic coating.
(5) Baking step (baking finish)

After completion of each of the aforementioned coating steps, a corresponding baking step (baking finish) is effected, typically at 140°C to 200°C for several tens of minutes. During the baking step (baking finish), conventional materials for producing plastic outer panels undergo melting, deformation, and changes in dimensions. Among plastic materials, nylon-based materials provide undesirable blisters (foaming at the surface), etc. Accordingly, the body to which only metallic outer panels have been attached is coated in a metal-coating line, and plastic parts are coated in another coating line for exclusively coating plastic parts. Thus, a step for reassembly of the coated body and coated plastic parts is required. In other words, coating and fabricating one automobile requires two lines for coating steps and two lines for fabrication steps.

By use of the resin composition of the present invention, even when coating of plastic parts is performed in the same line as that for coating metallic parts, the aforementioned drawbacks do not arise, to thereby remarkably reduce the number of production steps.

### Examples

The present invention will next be described in more detail by way of examples, which should not be construed as limiting the invention thereto.

### Evaluation methods

(1) MI: Measured at 300°C, under a load of 2.16 kg
(2) Heat distortion temperature: Measured in accordance with ASTM D648, under a load of 0.46 MPa
(3) Evaluation of appearance after coating: By visual observation
(4) Percent shrinkage after coating: Percent shrinkage caused by coating was calculated on the basis of comparison with a test piece that had not undergone molding.

### Production Example 1 (method of producing fumaric acid-modified poly(phenylene ether))

Poly(phenylene ether) (intrinsic viscosity: 0.45 dL/g in chloroform at 25°C) (1 kg), fumaric acid (30 g), and 2,3-dimethyl-2,3-diphenylbutane (NOFMER BC, product of Nippon Oil & Fats Co., Ltd.) serving as a radical generator (20 g) were dry-blended and melt-kneaded by means of a double screw extruder (30 mm) at 300°C and a screw rotation speed of 200 rpm. The temperature of the resin was approximately 331°C. The resultant strands were cooled and pelletized, to thereby yield fumaric acid-modified poly(phenylene ether). In order to measure percent modification, the thus-obtained fumaric acid-modified poly(phenylene ether) (1 g) was dissolved in ethylbenzene; reprecipitated in methanol; and collected. The collected polymer was subjected to Soxhlet's extraction by use of methanol, and the product was dried. The percent modification obtained based on the IR absorption intensity of CO and results of titration was found to be 1.45 wt.%.

### Example 1

SPS resin (130ZC, product of Idemitsu Petrochemical Co., Ltd. MI (300°C,1.2kg)=13) (80 parts by weight), rubber-like elastomer (Septon 8006, product of Kuraray Co., Ltd) (20 parts by weight), fumaric acid-modified poly(phenylene ether) obtained in Production Example 1 (2 parts by weight), a nucleating agent (NA-35, product of Asahi Denka) (0.5 parts by weight), an antioxidant (Irganox 1010, product of Ciba Specialty Chemicals K. K.) (0.2 parts by weight), PEP-36 (product of Asahi Denka) (0.2 parts by weight), and a mold-releasing agent (SH 200, product of Dow Corning Toray) (0.2 parts by weight) were dry-blended and melt-kneaded by means of a double screw extruder TEM-35B. Upon kneading, chopped glass fiber (03-JA-FT164G, product of Asahi Fiber Glass Co., Ltd.) (18 parts by weight) was fed from a side-feeder. The thus-yielded strands were cooled by water and pelletized, to thereby obtain pellets of a resin composition. The ratio of glass fiber to SPS resin (100) was found to be 23%. The MI of the pellets at 300°C under a load of 2.16 kg was found to be 12. The test piece prepared by injection molding using the pellets was found to have a heat distortion temperature of 259°C at 0.46 MPa.

The pellets were injection-molded at a mold temperature of 140°C, to thereby prepare a plate-like test piece (length 100 mm, width 100 mm, thickness 2.5 mm). In a similar manner, the pellets were injection-molded at a mold temperature of 140°C, to thereby prepare a plate-like test piece (length 500 mm, width 150 mm, thickness 2.5 mm). Both test pieces exhibited good appearance just after molding.

Each of the test pieces was coated with Magicron 1000 (product of Kansai Paint Co., Ltd.), and the coating was dried and cured at 180°C for 20 minutes. Appearance of the coated test piece was observed, and percent change in length of the long side was measured. The results are shown in Table 1.

### Examples 2 to 5 and Comparative Examples 1 to 5

The procedure of Example 1 was repeated, except that materials listed in Table 1 were employed. The results are shown in Table 1.

### Reference Example 1

PP resin (SP 850, product of Idemitsu Petrochemical Co., Ltd.) serving as molding material was injection-molded at a mold temperature of 40°C, to thereby prepare plate-like test pieces (length 100 mm, width 100 mm, thickness 2.5 mm, and length 500 mm, width 150 mm, thickness 2.5 mm). Each of the test pieces was coated with Magicron 1000 (product of Kansai Paint Co., Ltd.), and the coating was dried and cured at 180°C for 20 minutes. Appearance of the coated test piece was observed, and percent change in length of the long side was measured. The results are shown in Table 1.

### Reference Example 2

PC/ABS resin (Excelloy CK45, product of Techno Polymer Co., Ltd.) serving as molding material was injection-molded at a mold temperature of 80°C, to thereby prepare plate-like test pieces (length 100 mm, width 100 mm, thickness 2.5 mm, and length 500 mm, width 150 mm, thickness 2.5 mm). Each of the test pieces was coated with Magicron 1000 (product of Kansai Paint Co., Ltd.), and the coating was dried and cured at 180°C for 20 minutes. Appearance of the coated test piece was observed, and percent change in length of the long side was measured. The results are shown in Table 1.

### Reference Example 3

Noryl GTX 6203 (product of GE Plastics Japan Ltd.) serving as molding material was injection-molded at a mold temperature of 40°C, to thereby prepare plate-like test pieces (length 100 mm, width 100 mm, thickness 2.5 mm, and length 500 mm, width 150 mm, thickness 2.5 mm). Each of the test pieces was coated with Magicron 1000 (product of Kansai Paint Co., Ltd.), and the coating was dried and cured at 180°C for 20 minutes. Appearance of the coated test piece was observed, and percent change in length of the long side was measured. The results are shown in Table 1.

As is clear from comparison of Example 1 and Comparative Example 1, an insufficient heat distortion temperature of a composition results in undesirable change in surface condition and dimensions during baking.

As is also clear from comparison of Example 1 and Comparative Example 2, incorporation of a fibrous filler material in an excess amount causes poor appearance. The appearance is reasonably acceptable in comparatively small molded products, but in large-scale molded products, inferiority in appearance is visually recognized , despite the products being coated.

As is clear from comparison of Example 1 and Comparative Example 3, poor flowability of a resin composition provides difficulty in molding. The difficulty is insignificant in comparatively small molded products, but is problematic in large-scale molded products.

As is clear from comparison of Example 1 and Comparative Example 4, incorporation of a fibrous filler material in an insufficient amount causes deterioration in heat resistance. Such poor heat resistance constitutes a drawback in large-scale molded products.

As is clear from comparison of Example 1 and Comparative Example 5, even when a fibrous filler material is provided in a sufficient amount, heat resistance is deteriorated. Such poor heat resistance constitutes a drawback during a coating step.

The resins of Reference Examples 1 to 3 are not preferred, since these resins cause melting, change in dimensions, etc. during coating.

**[Table 1] (1/6)**

| | | Ex. 1 | Ex. 2 | Ex. 3 | Ex. 4 | Ex. 5 | Ex. 6 |
|---|---|---|---|---|---|---|---|
| SPS resin 300ZC | phr | 80 | 90 | | 80 | 80 | 80 |
| SPS resin 130ZC | phr | | | 80 | | | |
| SPS resin 30A | phr | | | | | | |
| Fumaric acid-modified PPE | phr | 2 | 2 | 2 | 5 | 2 | 2 |
| Rubber-like elastomer Septon 8006 | phr | 20 | 10 | 20 | 20 | 20 | 20 |
| Nucleating agent NA35 | phr | 0.5 | 0.5 | 0.5 | 0.5 | 0.5 | 0.5 |
| Antioxidant Irganox 1010 | phr | 0.2 | 0.2 | 0.2 | 0.2 | 0.2 | 0.2 |
| Antioxidant PEP-36 | phr | 0.2 | 0.2 | 0.2 | 0.2 | 0.2 | 0.2 |
| Glass fiber 03-FT-JA164G | phr | 18 | 18 | 18 | 18 | 5 | 30 |
| Carbon fiber Pyrofil TR066 | phr | | | | | | |
| Milled glass MF06JB1-20 | phr | | | | | | |
| Fibrous filler material content (SPS 100) | % | 23 | 20 | 23 | 23 | 6 | 38 |

**[Table 1] (2/6)**

| | | Comp. Ex. 1 | Comp. Ex. 2 | Comp. Ex. 3 | Comp. Ex. 4 | Comp. Ex. 5 |
|---|---|---|---|---|---|---|
| SPS resin 300ZC | phr | 55 | 80 | | 80 | 80 |
| SPS resin 130ZC | phr | | | | | |
| SPS resin 30A | phr | | | 80 | | |
| Fumaric acid-modified PPE | phr | 2 | 2 | 2 | 2 | 2 2 |
| Rubber-like elastomer Septon 8006 | phr | 45 | 20 | 20 | 20 | 20 |
| Nucleating agent NA35 | phr | 0.5 | 0.5 | 0.5 | 0.5 | 0.5 |
| Antioxidant Irganox 1010 | phr | 0.2 | 0.2 | 0.2 | 0.2 | 0.2 |
| Antioxidant PEP-36 | phr | 0.2 | 0.2 | 0.2 | 0.2 | 0.2 |
| Glass fiber 03-FT-JA164G | phr | 18 | 45 | 18 | 2 | |
| Carbon fiber Pyrofil TR066 | phr | | | | | |
| Milled glass MF06JB1-20 | phr | | | | | 5 |
| Fibrous filler material content (SPS 100) | % | 33 | 56 | 23 | 3 | 6 |

**[Table 1] (3/6)**

| | | Ref. Ex. 1 | Ref. Ex. 2 | Ref. Ex. 3 |
|---|---|---|---|---|
| SPS resin 300ZC | phr | PP SP850 | PC/ABS Excelloy CK45 | PA/PPE Noryl GTX6203 |
| SPS resin 130ZC | phr | | | |
| SPS resin 30A | phr | | | |
| Fumaric acid-modified PPE | phr | | | |
| Rubber-like elastomer Septon 8006 | phr | | | |
| Nucleating agent NA35 | phr | | | |
| Antioxidant Irganox 1010 | phr | | | |
| Antioxidant PEP-36 | phr | | | |
| Glass fiber 03-FT-JA164G | phr | | | |
| Carbon fiber Pyrofil TR066 | phr | | | |
| Milled glass MF06JB1-20 | phr | | | |
| Fibrous filler material content (SPS 100) | % | | | |

**[Table 1] (4/6)**

| | | Ex. Ex. 1 2 | | Ex. 3 | Ex. 4 | Ex. Ex. 5 6 | |
|---|---|---|---|---|---|---|---|
| MI (g/10 min) (300°C, 2.16 kg) | | 12 | 13 | 6 | 11 | 18 | 10 |
| 0.46 MPa Heat distortion temp. | °C | 259 | 260 | 259 | 252 | 244 | 260 |
| 100×100 plate Surface appearance before coating | | ○ | ○ | ○ | ○ | ○ | ○ |
| 100×100 plate Surface appearance after coating | | ○ | ○ | ○ | ○ | ○ | ○ |
| 100×100 plate Percent shrinkage after coating | % | ≤0.01 | ≤0.01 | ≤0.01 | ≤0.01 | ≤0.01 | ≤0.01 |
| 500×150 plate Surface appearance before coating | | ○ | ○ | ○ | ○ | ○ | ○ |
| 500×150 plate Surface appearance after coating | | ○ | ○ | ○ | ○ | ○ | ○ |
| 500x150 plate Percent shrinkage after coating | % | ≤0.01 | ≤0.01 | ≤0.01 | ≤0.01 | ≤0.01 | ≤0.01 |
| O: Good | | | | | | | |
| A: Partially deformed | | | | | | | |
| B: Rough surface | | | | | | | |
| C: Unmeasurable, mold-filling incomplete due to poor flowability | | | | | | | |
| D: Unmeasurable, warped | | | | | | | |

**[Table 1] (5/6)**

| | | Comp. Ex. 1 | Comp. Ex. 2 | Comp. Ex. 3 | Comp. Ex. 4 | Comp. Ex. 5 |
|---|---|---|---|---|---|---|
| MI (g/10 min) (300°C, 2.16 kg) | | 6 | 10 | 3 | 22 | 28 |
| 0.46 MPa Heat distortion temp. | °C | 190 | 265 | 259 | 120 | 110 |
| 100×100 plate Surface appearance before coating | | ○ | ○ | ○ | ○ | ○ |
| 100×100 plate Surface appearance after coating | | A | O | O | O | O |
| 100×100 plate Percent shrinkage after coating | % | 0.5 | ≤0.01 | ≤0.01 | D | 0.9 |
| 500×150 plate Surface appearance before coating | | O | B | C | O | A |
| 500×150 plate Surface appearance after coating | | A | B | C | O | A |
| 500x150 plate Percent shrinkage after coating | % | 0.6 | ≤0.01 | - | D | 0.9 |
| O: Good | | | | | | |
| A: Partially deformed | | | | | | |
| B: Rough surface | | | | | | |
| C: Unmeasurable, mold-filling incomplete due to poor flowability | | | | | | |
| D: Unmeasurable, warped | | | | | | |

**[Table 1] (6/6)**

| | | Ref. Ex. 1 | Ref. Ex. 2 | Ref. Ex. 3 |
|---|---|---|---|---|
| MI (g/10 min) (300°C, 2.16 kg) | | - | - | - |
| 0.46 MPa Heat distortion temp. | °C | 115 | 132 | 185 |
| 100×100 plate Surface appearance before coating | | Melted | Melted | A |
| 100×100 plate Surface appearance after coating | | Melted | Melted | A |
| 100×100 plate Percent shrinkage after coating | % | - | - | 0.8 |
| 500×150 plate Surface appearance before coating | | Melted | Melted | A |
| 500×150 plate Surface appearance after coating | | Melted | Melted | A |
| 500×150 plate Percent shrinkage after coating | % | - | - | 0.8 |
| O: Good | | | | |
| A: Partially deformed | | | | |
| B: Rough surface | | | | |
| C: Unmeasurable, mold-filling incomplete due to poor flowability | | | | |
| D: Unmeasurable, warped | | | | |

Materials employed in Examples and Comparative Examples SPS resin: 300ZC (product of Idemitsu Petrochemical Co., Ltd. MI (300°C, 1.2kg) =30) and 30A (product of Idemitsu Petrochemical Co., Ltd. MI (300°C,1.2kg)=3) Rubber-like elastomer: Septon 8006 (product of Kuraray Co., Ltd.)
Fumaric acid-modified PPE: Produced in Production Example 1 Nucleating agent: NA-35 (product of Asahi Denka) Antioxidant: Irganox 1010 (product of Ciba Specialty Chemicals K. K.) and PEP-36 (product of Asahi Denka)
Mold-releasing agent: SH 200 (product of Dow Corning Toray) Chopped glass fiber: 03-FT-JA164G (product of Asahi Fiber Glass Co., Ltd.)
Carbon fiber: Pyrofil TR066 (product of Mitsubishi Rayon Co., Ltd.)
Milled glass: MF06JB1-20 (product of Asahi Fiber Glass Co., Ltd.)

## Claims

1. A resin composition for producing a bodywork component, the composition predominantly comprising a syndiotactic styrene polymer (SPS), wherein the composition contains a fibrous filler material in an amount of 3 to 50 parts by weight based on 100 parts by weight of SPS; exhibits an MI of 4 to 40 at 300°C under a load of 2.16 kg; and has a heat distortion temperature of 200°C or higher at 0.46 MPa.

2. A resin composition according to claim 1, wherein the syndiotactic styrene polymer (SPS) exhibits an MI of 10 to 60 at 300°C under a load of 1.2 kg.

3. A resin composition according to claim 1 or 2, which further comprises a rubber-like elastomer, with polystyrene forming one continuous phase, in an amount of 1 to 40 parts by weight based on 100 parts by weight of the syndiotactic styrene polymer (SPS).

4. A resin composition according to any one of the preceding claims, which further comprises a electrically conductive material, in an amount of 1 to 20 parts by weight based on 100 parts by weight of the syndiotactic styrene polymer (SPS).

5. A resin composition according to any one of the preceding claims, which further comprises a polyamide, in an amount of 5 to 100 parts by weight based on 100 parts by weight of the syndiotactic styrene polymer (SPS).

6. A resin composition according to any one of the preceding claims, which further comprises a polymer having compatibility and affinity with the SPS and containing a polar group, in an amount of 0.1 to 10 parts by weight based on 100 parts by weight of the syndiotactic styrene polymer (SPS).

7. A resin composition according to claim 6, wherein the polymer having compatibility and affinity with the SPS and containing a polar group is at least one species selected from a polar-group-modified poly(phenylene ether) and a polar-group-modified syndiotactic polystyrene.

8. A resin composition according to claim 7, wherein the polar group is at least one species selected from maleic anhydride, fumaric acid, and derivatives thereof.

9. A bodywork component made of a resin composition according to any one of the preceding claims.

10. The bodywork component according to claim 9, **characterized in that** it is an outer panel of a vehicle.

11. Vehicle enameling process according to which the vehicle passes through the electrophoretic enameling unit with at least one bodywork component or outer panel according to claim 9 or 10.

12. Vehicle enameling process according to claim 11, **characterized in that** the electrophoretic enameling is carried out at a temperature of at least 175°C.

13. Vehicle enameling process according to claims 11 or 12, **characterized in that** the outer panel passes through the electrophoretic enameling unit in a finally assembled state.

14. Vehicle enameling process according to claim 13, **characterized in that** the outer panel is immovably attached in one place to the bodywork in its finally assembled state, with the outer panel having holes into which the attachment sections of a guide element immovably attached to the bodywork reach, in such a way that in the event of thermal expansion, the outer panel can move longitudinally in relation to the guide elements.

15. Vehicle enameling process according to claim 14, **characterized in that** the outer panel is a wing which has several longitudinal holes in a first marginal area on the hood side and in a second marginal area on the bearing pillar side, running at an angle to the first marginal area, said holes being positioned at a certain distance from each other and stretching longitudinally in the direction of the thermal expansion of the wing, with the wing in its finally assembled state being immovably attached to the corner area of the bodywork located between the first and the second marginal areas, and reaching into the longitudinal holes of each of the attachment sections of a guide element which in turn is immovably attached to the bodywork, in such a way that in the event of thermal expansion, the wing can move longitudinally in relation to the guide elements which are fastened to the bodywork.
